# FASCICULE DE BREVET EUROPEEN

(11) **EP 2 712 747 B1**
(45) Date de publication et mention de la délivrance du brevet: **26.07.2017**
(21) Numéro de dépôt: 13184260.1
(22) Date de dépôt: 13.09.2013
(51) Int. Cl.: B60H 1/34

(54) **Dispositif de sortie d'air agencé pour empêcher le passage de petits objets**
Air nozzle arranged to prevent small objects from coming through
Luftausströmer gestaltet zur Verhinderung des Durchgangs von kleinen Objekten

(30) Priorité: 28.09.2012 FR 1259204
(43) Date de publication de la demande: 02.04.2014
(73) Titulaire: Faurecia Intérieur Industrie, 92000 Nanterre (FR)
(72) Inventeur: Bleker, Julien, 95400 Villiers le Bel (FR); Bouldron, Ludovic, 95300 Pontoise (FR)
(74) Mandataire: Lavoix

(56) Documents cités:
- EP-A1- 0 856 423
- EP-A1- 1 452 359
- WO-A1-2011/089736
- WO-A1-2012/069741
- GB-A- 1 296 921
- US-A1- 2011 319 005

## Description

La présente invention concerne un dispositif de sortie d'air d'un système d'aération, comprenant au moins une paroi périphérique formant une conduite d'air et, au voisinage de l'extrémité aval de la conduite d'air, une pluralité de premières ailettes, s'étendant sensiblement selon une première direction et étant mobiles en rotation autour d'axes, s'étendant selon ladite première direction, entre une position centrale et au moins une position extrême, chacune desdites ailettes comprenant au moins une face principale, ladite face principale s'étendant sensiblement parallèlement à la paroi périphérique dans la position centrale de l'ailette.

L'invention concerne également une planche de bord de véhicule comprenant un tel dispositif de sortie d'air.

Le système d'aération de l'habitacle d'un véhicule automobile débouche généralement dans au moins un orifice prévu dans la planche de bord du véhicule. Un dispositif de sortie d'air ferme cet orifice et permet de contrôler la direction du flux d'air sortant du système d'aération.

Un tel dispositif de sortie d'air comprend par exemple un premier jeu d'ailettes sensiblement horizontales et un deuxième jeu d'ailettes sensiblement verticales, les jeux étant montés en rotation et s'étendant l'un devant l'autre en travers de la partie extrême aval d'une conduite d'air reliant le système d'aération à l'orifice de sortie de l'air. La rotation des ailettes horizontales permet d'orienter le flux d'air vers le haut ou vers le bas et la rotation des ailettes verticales permet d'orienter le flux d'air vers la droite ou vers la gauche. Le document US-2011/319005 décrit un tel dispositif comprenant une deuxième ailette pourvue de reliefs destinés à améliorer l'étanchéité à l'air.

Dans certaines positions des ailettes, notamment dans la position centrale, dans laquelle les ailettes laissent passer la plus grande quantité d'air, l'espacement entre les ailettes est suffisant pour permettre l'intrusion de petits objets à l'intérieur du dispositif de sortie d'air et donc à l'intérieur du système d'aération, ce qui peut endommager celui-ci ou mener à son obturation et donc à son malfonctionnement. De tels espaces pourraient également mener à des objets introduits accidentellement dans le système d'aération à être éjectés du dispositif de sortie d'air avec l'air sortant du dispositif, ce qui pourrait constituer une gêne pour les occupants du véhicule, voire un risque pour leur sécurité.

Pour éviter l'introduction de tels objets, il est connu d'ajouter une grille dans le dispositif de sortie d'air. Une telle grille laisse passer l'air par ses ouvertures, dont les dimensions sont en outre adaptées pour empêcher le passage de petits objets au travers. Cependant, une telle grille augmente le nombre d'éléments constitutifs du dispositif de sortie d'air, ce qui complexifie son montage et augmente son coût. En outre, une telle grille réduit les performances aérauliques du dispositif de sortie d'air, dont le débit d'air maximal en sortie est diminué.

Une autre solution consiste à rapprocher les ailettes les unes des autres afin de réduire l'espacement entre elles. Cependant, une telle solution entraîne également des pertes de performances aérauliques et une réduction du débit d'air maximal en sortie du dispositif de sortie d'air. En outre, ce rapprochement peut nécessiter l'ajout d'ailettes supplémentaires en travers de la sortie d'air, ce qui augmente également le nombre d'éléments constitutifs du dispositif de sortie d'air.

L'un des buts de l'invention est de pallier ces inconvénients en proposant un dispositif de sortie d'air permettant d'empêcher le passage de petits objets au travers tout en ayant un nombre d'éléments constitutifs réduits et en conservant des performances aérauliques acceptables.

A cet effet, l'invention concerne un dispositif de sortie d'air du type précité, dans lequel chaque première ailette comprend une rangée de reliefs s'étendant en saillie de la face principale et répartis sur ladite face principale, les reliefs de la face principale s'étendant entre deux premières ailettes adjacentes ou entre une première ailette et la paroi périphérique lorsque ladite ailette est adjacente à ladite paroi, chaque relief formant un angle non nul avec l'axe de l'ailette de sorte à réduire, au droit dudit relief, l'espace entre la face principale de ladite ailette et les premières ailettes adjacentes ou la paroi périphérique dans ladite position centrale.

En positionnant et en agençant les reliefs de façon adéquate, l'espace entre la première ailette dans sa position centrale et les premières ailettes adjacentes ou la paroi périphérique est insuffisant pour permettre le passage de petits objets, qui sont ainsi emprisonnés entre les reliefs et les ailettes adjacentes ou la paroi périphérique s'ils passent au travers du dispositif de sortie d'air. De tels reliefs permettent de conserver la structure générale du dispositif de sortie d'air, c'est-à-dire qu'il n'est pas nécessaire d'ajouter d'éléments au dispositif. En outre, la présence de tels reliefs impacte très peu les performances aérauliques du dispositifs de sortie d'air du fait de son faible encombrement et de la faible opposition qu'ils forment au passage de l'air au travers du dispositif de sortie d'air.

Selon d'autres caractéristiques du dispositif de sortie d'air selon l'invention :
- la première ailette comprend deux faces principales opposées l'une à l'autre et s'étendant sensiblement parallèlement à la paroi périphérique dans la position centrale de la première ailette, chacune desdites faces comprenant une rangée de reliefs ;
- les faces principales de chaque ailette comprennent chacune une rangée de reliefs s'étendant sensiblement parallèlement les uns aux autres, la rangée de la face principale d'une ailette étant décalée selon la première direction et/ou selon l'axe de la conduite d'air par rapport à la rangée de la face principale d'une ailette adjacente ;

- la paroi périphérique comprend au moins un relief s'étendant en saillie de ladite paroi périphérique et vers une première ailette adjacente ;
- chaque relief s'étend sur une partie amont, respectivement sur une partie aval, de la face principale de la première ailette, la partie aval, respectivement la partie amont, de ladite face principale étant dépourvue de relief ;
- chaque relief d'une face principale de l'ailette s'étend sur la partie amont de ladite face principale, chaque relief de l'autre face principale de ladite ailette s'étendant sur la partie aval de ladite face principale ;
- le dispositif comprend en outre au moins une deuxième ailette, s'étendant selon une deuxième direction, différente de la première direction, et étant mobile en rotation autour d'un axe s'étendant selon la deuxième direction ;
- dans la position extrême, les premières ailettes sont plaquées les unes contre les autres de sorte à obturer la conduite d'air et empêcher l'air de passer au-delà desdites premières ailettes ;
- dans la position extrême, les parties amont des premières ailettes prennent appui les unes contres les autres.

L'invention concerne également une planche de bord de véhicule comprenant au moins un orifice de sortie d'air, relié à un système d'aération du véhicule, un dispositif de sortie d'air tel que décrit ci-dessus étant disposé dans ledit orifice de sorte à contrôler la direction du flux d'air sortant dudit système d'aération.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'un dispositif de sortie d'air,
- la Fig. 2 est une représentation schématique en coupe du dispositif de sortie d'air selon l'axe II-II de la Fig. 1,
- la Fig. 3 est une représentation schématique en perspective de la partie du dispositif de sortie d'air de la Fig. 2, et
- la Fig. 4 est une représentation schématique en perspective de la partie du dispositif de sortie d'air de la Fig. 2 selon un autre mode de réalisation.

Dans la description le terme « longitudinal » est défini selon les directions s'étendant dans le plan définit par la longueur et la largueur du véhicule, c'est-à-dire un plan sensiblement horizontal, le terme « transversal » est défini selon un plan perpendiculaire au plan longitudinal, c'est-à-dire, un plan sensiblement vertical correspondant à la hauteur du véhicule. Les termes « avant », « arrière » sont définis par rapport aux directions usuelles d'un véhicule monté et les termes « amont » et « aval » sont définis par rapport à la direction avant-arrière.

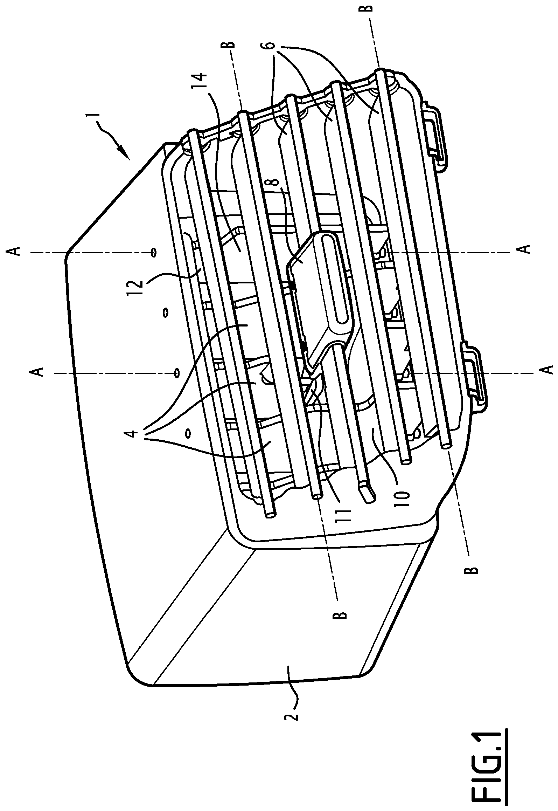

En référence à la Fig. 1, on décrit un dispositif de sortie d'air 1, destiné, de façon classique, à obturer un orifice de sortie d'air prévu dans une planche de bord (non représentée) et relié à un système d'aération (non représenté).

Le dispositif 1 comprend un corps 2 monté sur la partie extrême d'un conduit de guidage de l'air reliant le système d'aération à l'orifice de sortie d'air. Le corps 2 peut être réalisé d'une seule pièce avec le conduit de guidage de l'air. Le corps 2 est creux de façon à laisser circuler l'air et comprend au moins une paroi périphérique 3 formant une conduite d'air, destinée à être reliée au système d'aération.

De façon classique, un jeu de premières ailettes 4 s'étendant selon une première direction est monté en rotation en travers du corps 2. Les premières ailettes 4 sont disposées les unes à côtés des autres de sorte à être réparties sur la largeur du corps 2. Chaque première ailette 4 est mobile autour d'un axe A s'étendant selon la première direction et les premières ailettes 4 sont solidaires en rotation les unes des autres, c'est-à-dire que la rotation d'une première ailette 4 entraîne la rotation des autres premières ailettes 4. Selon le mode de réalisation représenté sur les figures et décrit ci-dessous, la première direction est sensiblement transversale.

Egalement de façon classique, le dispositif comprend un jeu de deuxièmes ailettes 6 s'étendant selon une deuxième direction, différente de la première direction, les deuxièmes ailettes 6 étant montées en rotation en travers du corps 2. Les deuxièmes ailettes 6 sont disposées les unes au-dessus des autres de sorte à être réparties sur la hauteur du corps. Chaque deuxième ailette 6 est mobile autour d'un axe B s'étendant selon la deuxième direction et les deuxièmes ailettes 6 sont solidaires en rotation les unes des autres, c'est-à-dire que la rotation d'une deuxième ailette 6 entraîne la rotation des autres deuxièmes ailettes 6. Le jeu de deuxièmes ailettes 6 s'étend derrière le jeu de premières ailettes 4, de sorte que les deuxièmes ailettes 6 masquent les premières ailettes 4, comme représenté sur la Fig. 1. Selon le mode de réalisation représenté sur la Fig. 1, la deuxième direction est sensiblement longitudinale.

Le dispositif 1 comprend un actionneur 8 agencé pour commander la rotation du jeu de premières ailettes 4 et du jeu de deuxièmes ailettes 6.

A cet effet, l'actionneur 8 est monté sur une des deuxièmes ailettes 6, par exemple la deuxième ailette 6 s'étendant sensiblement au centre du corps 2, de sorte à être solidaire en rotation de cette deuxième ailette 6. Ainsi, un mouvement en rotation autour de l'axe longitudinal B de l'actionneur 8 entraîne le mouvement en rotation de la deuxième ailette 6 sur laquelle l'actionneur 8 est monté et donc un mouvement de toutes les deuxièmes ailettes. Le déplacement en rotation de l'actionneur 8 se fait sensiblement du bas vers le haut et inversement et les deuxièmes ailettes 4 permettent ainsi d'orienter le flux d'air sortant du système d'aération selon une direction sensiblement verticale.

L'actionneur 8 est en outre mobile en translation sur la deuxième ailette 4 sur laquelle l'actionneur 8 est monté entre deux positions extrêmes. Ainsi, l'actionneur 8 peut se déplacer selon l'axe longitudinal B. L'actionneur 8 comprend un dispositif de connexion 11 à une première ailette 4, par exemple la première ailette 4 s'étendant sensiblement au centre du corps 2, de sorte qu'un déplacement en translation de l'actionneur 8 entraîne une rotation de la première ailette 4, et donc un mouvement de toutes les premières ailettes 4, autour de l'axe sensiblement transversal A. Le déplacement en translation de l'actionneur 8 se fait de droite à gauche et inversement et les premières ailettes 6 permettent ainsi d'orienter le flux d'air sortant du système d'aération selon une direction sensiblement horizontale. La structure du dispositif de connexion, par exemple sous la forme d'une fourche 11 est connue et ne sera pas décrite en détail ici.

L'actionneur 8 présente par exemple une forme de languette entourant une partie de la première ailette 4, comme représenté sur la Fig. 1. Selon un autre mode de réalisation, on peut prévoir deux actionneurs distincts pour actionner la rotation des premières ailettes 4 et la rotation des deuxièmes ailettes 6. De façon connue, ces deux actionneurs se présentent par exemple sous la forme de molettes actionnables en rotation, l'une étant reliée aux premières ailettes 4 et l'autre étant reliées aux deuxièmes ailettes 6.

Chaque ailette 4 et 6 est par exemple réalisée d'une seule pièce par moulage. Chaque ailette 4 et 6 comprend deux faces principales 10, opposées et sensiblement parallèles l'une de l'autre, formant des surfaces de guidage de l'air circulant dans la conduite d'air et permettant d'orienter le trajet de l'air lorsqu'elles sont déplacées en rotation. Chaque face principale 10 comprend une partie amont 12 s'étendant le plus en amont dans la conduite d'air et une partie aval 14 s'étendant en arrière de la partie amont 12 et donc plus en aval dans la conduite d'air. Ainsi, la partie amont 12 des faces principales 10 des deuxièmes ailettes 6 sont adjacentes à la partie aval 14 des faces principales 10 des premières ailettes 4.

Les premières ailettes 4 sont mobiles entre une position centrale, représentée sur les figures, et deux positions extrêmes (non représentées).

Dans la position centrale, les premières ailettes 4 s'étendent sensiblement selon l'axe de la conduite d'air. Cette position correspond à une orientation de l'air sortant sensiblement perpendiculaire au plan dans lequel s'étend l'orifice de sortie d'air du système d'aération. Dans cette position, les faces principales 10 des premières ailettes 4 ne modifient sensiblement pas l'orientation du flux d'air venant du système d'aération. A cet effet, les faces principales 10 s'étendent sensiblement parallèlement à la paroi périphérique 3 dans la position centrale, comme représenté sur les figures. Cette position correspond donc à la position dans laquelle la surface de passage de l'air est la plus grande dans la conduite d'air au niveau des premières ailettes 4.

Dans les positions extrêmes, les premières ailettes 4 ont été tournées par l'actionneur 8 vers la droite ou vers la gauche, l'actionneur 8 étant dans ses positions extrêmes, de sorte à incliner les faces principales 10 des premières ailettes 4 dans la conduite d'air et ainsi à modifier l'orientation du flux d'air. Selon un mode de réalisation, au moins l'une de ces positions extrêmes correspond à une position d'obturation de la conduite d'air. Dans cette position, les premières ailettes 4 s'étendent sensiblement dans un même plan et sont plaquées les unes contre les autres, les parties amont 12 des premières ailettes 4 prenant appui les unes contre les autres de sorte que les premières ailettes 4 obturent la sortie d'air et empêchent l'air de sortir du système d'aération vers l'habitacle du véhicule automobile.

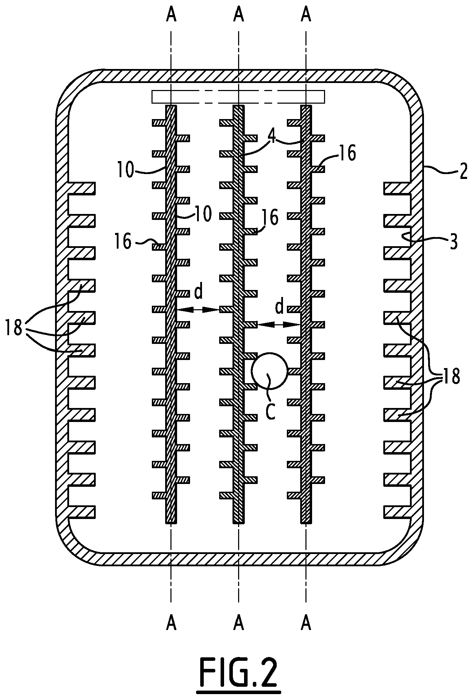

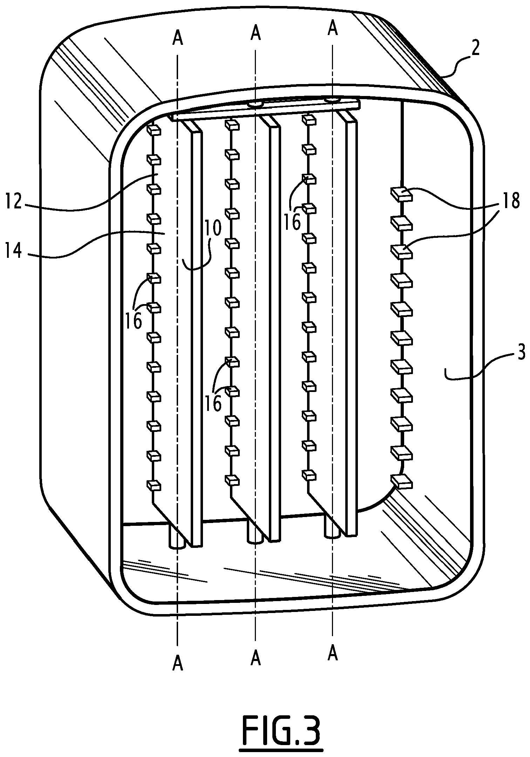

Comme représenté sur les Fig. 2 et 3, au moins une des faces principales 10 de chaque première ailette 4 comprend au moins un relief 16 s'étendant en saillie de la face principale vers une première ailette 4 adjacente, lorsque cette face principale 10 s'étend en regard d'une première ailette 4, ou vers la paroi périphérique 3, lorsque cette face principale 10 s'étend en regard de la paroi périphérique 3, de sorte à réduire, au droit du relief 16, la distance d séparant la face principale 10 de la première ailette 4 adjacente ou de la paroi périphérique 3. Ainsi, la distance entre deux faces principales 10 en regard l'une de l'autre de deux premières ailettes 4 adjacentes est par exemple sensiblement comprise entre 8 à 16 mm, lorsque les premières ailettes 4 sont dans leur position centrale, tandis que la distance d entre la face principale 10 d'une première ailette 4 et l'extrémité du relief 16 en saillie de la face principale 10 de la première ailette 4 s'étendant en regard est sensiblement comprise entre 5 à 10 mm. De manière générale, la distance d est agencée pour être suffisamment petite pour empêcher le passage d'objets de petites tailles, tels qu'un crayon ou autre, entre deux premières ailettes 4 ou entre une première ailette 4 et la paroi périphérique 3 lorsque les premières ailettes 4 se trouvent dans leur position centrale. Pour ajuster l'effet anti-intrusion d'objets, il est toutefois préférable de dimensionner les reliefs 16 de sorte qu'un cylindre tri-tangent C n'excède pas un certain diamètre. Par cylindre tri-tangent il faut comprendre le cylindre de plus grand diamètre qui peut être introduit entre deux premières ailettes 4 adjacentes tout en étant en contact avec le sommet de trois reliefs 16 et dont la trace C est visible à la figure 2. Le diamètre du cylindre tri-tangent C est d'environ 9 mm dans le mode de réalisation représenté, et de préférence compris entre 6 mm et 10 mm.

On entend par relief tout élément qui fait saillie d'une surface. Le relief peut ainsi, à titre indicatif et sans être limitatif, être une nervure, un bossage ou encore une succession de créneaux. Le relief pourra présenter différentes formes telles que parallélépipédique, tronconique, ou encore hémisphérique.

Selon un mode de réalisation, le relief 16 s'étend sensiblement perpendiculairement à la face principale 10, c'est-à-dire selon la largeur de la conduite d'aire lorsque les premières ailettes sont dans leur position centrale.

Selon le mode de réalisation représenté sur la Fig. 3, le relief 16 ne s'étend pas sur toute la face principale 10 selon la direction amont-aval, mais n'occupe que la partie amont 12 de la face principale 10. Selon un autre mode de réalisation, le relief 16 n'occupe que la partie aval 14 de la face principale 10.

Selon la première direction, le relief 16 présente une épaisseur faible, par exemple de l'ordre de 1 mm. Ainsi, le relief 16 est de faibles dimensions et n'occupe qu'un espace réduit dans la conduite d'air, ce qui réduit son influence sur les performances aérauliques du dispositif de sortie d'air 1. Selon un mode de réalisation non représenté, le relief 16 est incliné par rapport à la face principale 10.

Selon le mode de réalisation représenté sur les Fig. 2 et 3, au moins une des faces principales 10 de chaque première ailette 4 comprend une pluralité de reliefs 16 tels que décrits ci-dessus s'étendant parallèlement les uns par rapport aux autres et répartis sur la face principale 10 selon la première direction. Comme visible sur les figures, le même type de relief est répliqué selon une même forme parallélépipédique. En outre, la distance séparant deux reliefs 16 consécutifs pris sur une même face principale 10 d'une première ailette 4 est constante selon la première direction. Cette distance peut bien entendu varier en fonction des contraintes d'encombrements ou de performance aéraulique. Ainsi selon une mode de réalisation non représenté la distance séparant deux reliefs 16 consécutifs pris sur une même face principale 10 d'une première ailette 4 prise au centre de cette première ailette 4 pourra être différent de la distance séparant deux reliefs 16 consécutifs pris sur une même face principale 10 d'une première ailette 4 prise à au moins une extrémité de cette première ailette 4. Il est par ailleurs entendu, que le type de relief utilisé, sa forme et son épaisseur peuvent varier sur une même face principale 10 d'une première ailette 4. Ainsi, les objets sont empêchés de passer dans la conduite d'air sur toute la hauteur de celle-ci.

Selon le mode de réalisation représenté sur les Fig. 2 et 3, les deux faces principales 10 de chaque première ailette 4 comprennent une pluralité de reliefs 16 tels que décrits ci-dessus. Ainsi, l'espace s'étendant entre deux premières ailettes 4 adjacentes est limité par la présence de deux rangées de reliefs 16 s'étendant l'un en regard de l'autre et saillant des faces principales 10 adjacentes de ces deux premières ailettes, ce qui permet d'assurer qu'un objet entrant dans la conduite d'air sera emprisonné par les reliefs 16 quelle que soit la zone dans laquelle cet objet passe. Selon le mode de réalisation représenté sur les figures, les reliefs 16 d'une rangée s'étendant sur une face principale 10 d'une première ailette 4 sont décalés selon la première direction par rapport aux reliefs 16 de la rangée s'étendant sur la face principale 10 adjacente de la première ailette 4 adjacente. Ainsi, les reliefs 16 de deux faces principales 10 adjacentes de deux premières ailettes adjacentes 4 ne s'étendent pas strictement en regard les uns des autres. Une telle disposition des reliefs 16 permet de mieux limiter l'espace disponible pour le passage d'un objet entre deux ailettes adjacentes 4 dans leur position centrale, de réduire l'influence des reliefs 16 sur les performances aérauliques du dispositif de sortie d'air 1 et de permettre aux ailettes 4 d'être plus près les unes des autres dans leurs positions extrêmes afin de permettre l'obturation de la conduite d'air dans ces positions. Selon le mode de réalisation représenté, la distance séparant deux reliefs 16 consécutifs pris sur une même face principale 10 d'une première ailette 4 est la même que la distance séparant deux reliefs 16 consécutifs pris sur une même face principale 10 adjacente de la première ailette 4 adjacente. Selon un autre mode de réalisation non-représenté, ces mêmes distances peuvent être différentes.

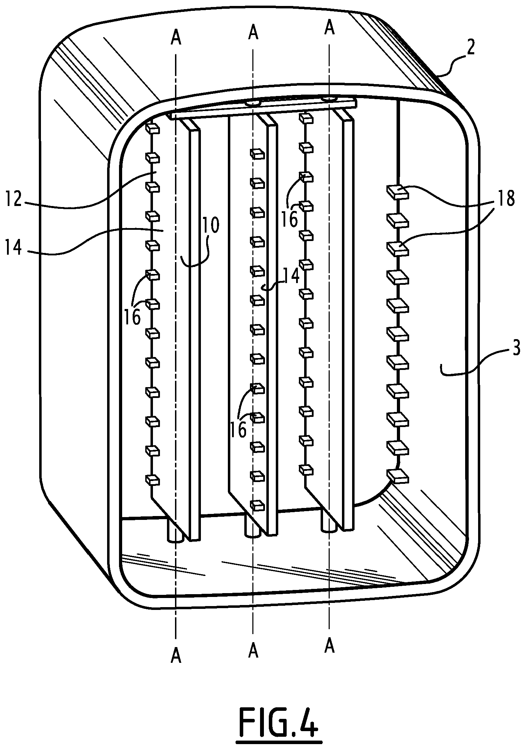

Le mode de réalisation représenté sur la Fig. 4 diffère de celui de la Fig. 3, en ce que les reliefs 16 ne s'étendent pas tous dans la partie amont 12 des ailettes 4. Selon ce mode de réalisation, les faces principales 10 des ailettes 4 se faisant face comprennent des reliefs 16 décalés selon la direction de la conduite d'air. Ainsi, la rangée de reliefs 16 de la face principale 10 de l'une des premières ailettes 4 s'étend par exemple sur la partie amont 12 de l'ailette 4, tandis que la rangée de reliefs 16 de la face principale 10 de la première ailette 4 adjacente, s'étendant en regard, s'étend sur la partie aval 14 de l'ailette adjacente.

Selon un mode de réalisation, la rangée de reliefs 16 d'une face principale 10 d'une ailette 4 s'étend sur la partie amont 12 de l'ailette 4 tandis que la rangée de reliefs 16 de l'autre face principale 10 de la même ailette 4 s'étend sur la partie aval 14 de cette ailette 4.

De tels modes de réalisations, avec des reliefs 16 décalés en hauteur et selon l'axe de la conduite d'air, permettent d'empêcher efficacement toute pénétration d'objets dans la conduite d'air.

Les reliefs 16 peuvent être réalisés simplement d'une seule pièce avec les premières ailettes 4, notamment par moulage par injection.

Selon le mode de réalisation représenté sur les figures, la paroi périphérique 3 comprend également une pluralité de reliefs 18 s'étendant dans les zones de la paroi périphérique qui s'étendent selon la première direction. Ainsi, l'espace s'étendant entre une première ailette 4 adjacente à la paroi périphérique 3 et la paroi périphérique 3 adjacente est également limité, de la même façon que l'espace s'étendant entre deux premières ailettes adjacentes 4. Les reliefs 18 de la paroi périphérique 3 peuvent être décalés selon la première direction et/ou selon l'axe de la conduite par rapport aux reliefs 16 s'étendant sur la face principale 10 en regard de la paroi périphérique 3.

Le dispositif de sortie d'air 1 décrit ci-dessus permet d'empêcher le passage d'objets dans la conduite d'air de façon simple, sans ajout de pièces rapportées, et sensiblement sans limiter les performances aérauliques du dispositif de sortie d'air 1. En outre, les reliefs 16 s'étendent dans une zone où elles sont invisibles depuis l'extérieur du dispositif de sortie d'air 1 et ne nuisent donc pas à l'esthétisme de ce dispositif. La présence de ces reliefs est en outre compatible avec les dispositifs de sortie d'air dont l'obturation se fait par les premières ailettes 4 lorsqu'elles sont dans l'une de leurs positions extrêmes.

Le dispositif selon l'invention permet de répondre aux différentes contraintes et exigences associées à ce type de dispositif par combinaison du type de relief, de la forme du relief, de l'épaisseur du relief, de la distance séparant deux reliefs 16 consécutifs pris sur une même face principale 10 d'une première ailette 4 ou sur une face principale 10 adjacente ou bien encore sur la paroi périphérique 3.

Dans le dispositif de sortie d'air 1 décrit ci-dessus, la première direction est la direction transversale et la deuxième direction est la direction longitudinale. Selon un autre mode de réalisation, la première direction est la direction longitudinale et la deuxième direction est la direction transversale. Selon encore un autre mode de réalisation, les première et deuxième directions ne sont pas perpendiculaires l'une par rapport à l'autre.

Le dispositif de sortie d'air 1 décrit ci-dessus a été décrit en relation avec une planche de bord, il peut bien entendu être utilisé avec d'autres pièces d'un véhicule automobile dans lesquelles un orifice de sortie d'air est prévu.

## Revendications

1. Dispositif de sortie d'air (1) d'un système d'aération, comprenant au moins une paroi périphérique (3) formant une conduite d'air et, au voisinage de l'extrémité aval de la conduite d'air, une pluralité de premières ailettes (4), s'étendant sensiblement selon une première direction et étant mobiles en rotation autour d'axes (A), s'étendant selon ladite première direction, entre une position centrale et au moins une position extrême, chacune desdites ailettes (4) comprenant au moins une face principale (10), ladite face principale s'étendant sensiblement parallèlement à la paroi périphérique (3) dans la position centrale de l'ailette (4), **caractérisé en ce que** chaque première ailette (4) comprend une rangée de reliefs (16) s'étendant en saillie de la face principale (10) et répartis sur ladite face principale (10), les reliefs (16) de la face principale (10) s'étendant entre deux premières ailettes (4) adjacentes ou entre une première ailette (4) et la paroi périphérique (3) lorsque ladite ailette (4) est adjacente à ladite paroi (3), chaque relief (16) formant un angle non nul avec l'axe de l'ailette de sorte à réduire, au droit dudit relief, l'espace entre la face principale de ladite ailette (4) et les premières ailettes (4) adjacentes ou la paroi périphérique (3) dans ladite position centrale.

2. Dispositif de sortie d'air selon la revendication 1, **caractérisé en ce que** la première ailette (4) comprend deux faces principales (10) opposées l'une à l'autre et s'étendant sensiblement parallèlement à la paroi périphérique (3) dans la position centrale de la première ailette (4), chacune desdites faces (4) comprenant une rangée de reliefs (16).

3. Dispositif de sortie d'air selon la revendication 2, **caractérisé en ce que** les faces principales (10) de chaque ailette (4) comprennent chacune une rangée de reliefs (16) s'étendant sensiblement parallèlement les uns aux autres, la rangée de la face principale (10) d'une ailette (4) étant décalée selon la première direction et/ou selon l'axe de la conduite d'air par rapport à la rangée de la face principale (10) d'une ailette adjacente (4).

4. Dispositif de sortie d'air selon l'une quelconque des revendications 1 à 3, **caractérisé en ce que** la paroi périphérique (3) comprend au moins un relief (18) s'étendant en saillie de ladite paroi périphérique (3) et vers une première ailette (4) adjacente.

5. Dispositif de sortie d'air selon l'une quelconque des revendications 1 à 4, **caractérisé en ce que** chaque relief (16) s'étend sur une partie amont (12), respectivement sur une partie aval (14), de la face principale (10) de la première ailette (4), la partie aval (14), respectivement la partie amont (12), de ladite face principale (10) étant dépourvue de relief (16).

6. Dispositif de sortie d'air selon l'une quelconque des revendications 2 à 5, **caractérisé en ce que** chaque relief (16) d'une face principale (10) de l'ailette (4) s'étend sur la partie amont (12) de ladite face principale (10), chaque relief (16) de l'autre face principale (10) de ladite ailette (4) s'étendant sur la partie aval (14) de ladite face principale.

7. Dispositif de sortie d'air selon l'une quelconque des revendications 1 à 6, **caractérisé en ce qu'**il comprend en outre au moins une deuxième ailette (6), s'étendant selon une deuxième direction, différente de la première direction, et étant mobile en rotation autour d'un axe (B) s'étendant selon la deuxième direction.

8. Dispositif de sortie d'air selon l'une quelconque des revendications 1 à 7, **caractérisé en ce que**, dans la position extrême, les premières ailettes (4) sont plaquées les unes contre les autres de sorte à obturer la conduite d'air et empêcher l'air de passer au-delà desdites premières ailettes (4).

9. Dispositif de sortie d'air selon la revendication 8 lorsqu'elle dépend de la revendication 6, **caractérisé en ce que**, dans la position extrême, les parties amont (12) des premières ailettes (4) prennent appui les unes contres les autres.

10. Planche de bord pour véhicule, ladite planche de bord comprenant au moins un orifice de sortie d'air, relié à un système d'aération du véhicule, **caractérisé en ce qu'**un dispositif de sortie d'air (1) selon l'une quelconque des revendications 1 à 9 est disposé dans ledit orifice de sorte à contrôler la direction du flux d'air sortant dudit système d'aération.

## Patentansprüche

1. Luftauslassvorrichtung (1) eines Belüftungssystems, aufweisend mindestens eine periphere Wand (3), welche einen Luftkanal bildet, und, in der Nähe des stromabwärtsseitigen Endes des Luftkanals, eine Mehrzahl an ersten Flügeln (4), welche sich im Wesentlichen entlang einer ersten Richtung erstrecken und welche um Achsen (A), welche sich entlang der ersten Richtung erstrecken, herum zwischen einer Zentralposition und mindestens einer Endposition drehbewegbar sind, wobei jeder der Flügel (4) mindestens eine Hauptfläche (10) aufweist, wobei sich in der Zentralposition des Flügels (4) die Hauptfläche (10) im Wesentlichen parallel zur peripheren Wand (3) erstreckt, **gekennzeichnet dadurch, dass** jeder erste Flügel (4) eine Reihe von Reliefen (16) aufweist, welche sich von der Hauptfläche (10) aus vorstehend erstrecken und auf der Hauptfläche (10) verteilt sind, wobei die Reliefe (16) der Hauptfläche (10) sich erstrecken zwischen zwei benachbarten ersten Flügeln (4) oder zwischen einem ersten Flügel (4) und der peripheren Wand (3), wenn der erste Flügel (4) benachbart zur besagten Wand (3) ist, wobei jedes Relief (16) einen Winkel ungleich Null mit der Achse des Flügels bildet, um, mittels des Reliefs, den Raum zwischen der Hauptfläche des Flügels (4) und den benachbarten ersten Flügeln (4) oder der peripheren Wand (3) in der Zentralposition zu verringern.

2. Luftauslassvorrichtung gemäß dem Anspruch 1, **gekennzeichnet dadurch, dass** der erste Flügel (4) zwei Hauptflächen (10), welche zueinander entgegengesetzt sind und welche sich in der Zentralposition des ersten Flügels (4) im Wesentlichen parallel zur peripheren Wand (3) erstrecken, aufweist, wobei jede von den Flächen (4) eine Reihe von Reliefen (16) aufweist.

3. Luftauslassvorrichtung gemäß dem Anspruch 2, **gekennzeichnet dadurch, dass** die Hauptflächen (10) jedes Flügels (4) jeweils eine Reihe von Reliefen (16) aufweisen, welche sich im Wesentlichen parallel zueinander erstrecken, wobei die Reihe der Hauptfläche (10) eines Flügels (4) entlang der ersten Richtung und/oder entlang der Achse des Luftkanals bezüglich der Reihe der Hauptfläche (10) eines benachbarten Flügels (4) versetzt ist.

4. Luftauslassvorrichtung gemäß irgendeinem der Ansprüche 1 bis 3, **gekennzeichnet dadurch, dass** die periphere Wand (3) wenigstens ein Relief (18) aufweist, welches sich von der peripheren Wand (3) aus vorstehend und in Richtung hin zu einem benachbarten ersten Flügel (4) erstreckt.

5. Luftauslassvorrichtung gemäß irgendeinem der Ansprüche 1 bis 4, **gekennzeichnet dadurch, dass** jedes Relief (16) sich an einem stromaufwärtsseitigen Teil (12) bzw. an einem stromabwärtsseitigen Teil (14) der Hauptfläche (10) des ersten Flügels (4) erstreckt, wobei der stromabwärtsseitige Teil (14) bzw. der stromaufwärtsseitige Teil (12) der Hauptfläche (10) frei von Relief (16) ist.

6. Luftauslassvorrichtung gemäß irgendeinem der Ansprüche 2 bis 5, **gekennzeichnet dadurch, dass** jedes Relief (16) einer Hauptfläche (10) des Flügels (4) sich an dem stromaufwärtsseitigen Teil (12) besagter Hauptfläche (10) erstreckt, wobei sich jedes Relief (16) der anderen Hauptfläche (10) des Flügels (4) sich an dem stromabwärtsseitigen Teil (14) besagter Hauptfläche erstreckt.

7. Luftauslassvorrichtung gemäß irgendeinem der Ansprüche 1 bis 6, **gekennzeichnet dadurch, dass** sie ferner mindestens einen zweiten Flügel (6) aufweist, welcher sich entlang einer zweiten Richtung, welche von der ersten Richtung verschieden ist, erstreckt und welcher um eine Achse (B), welche sich entlang der zweiten Richtung erstreckt, drehbewegbar ist.

8. Luftauslassvorrichtung gemäß irgendeinem der Ansprüche 1 bis 7, **gekennzeichnet dadurch, dass** in der Endposition die ersten Flügel (4) gegeneinander gedrückt sind, um den Luftkanal zu verschließen und zu verhindern, dass Luft über die ersten Flügel (4) hinaus strömt.

9. Luftauslassvorrichtung gemäß dem Anspruch 8, insofern er auf Anspruch 6 rückbezogen ist, **gekennzeichnet dadurch, dass** in der Endposition die stromaufwärtsseitigen Teile (12) der ersten Flügel (4) sich gegeneinander abstützen.

10. Armaturenbrett für ein Fahrzeug, wobei das Armaturenbrett aufweist mindestens eine Luftauslassöffnung, welche mit einem Belüftungssystem des Fahrzeugs verbunden ist, **gekennzeichnet dadurch, dass** eine Luftauslassvorrichtung gemäß irgendeinem der Ansprüche 1 bis 9 in der Öffnung angeordnet ist, um eine Richtung des Luftstroms welcher aus dem Belüftungssystem austritt, zu steuern.

## Claims

1. Air outlet device (1) of a ventilation system, comprising at least one peripheral wall (3) forming an air duct and, close to the downstream end of the air duct, a plurality of first fins (4), extending essentially along a first direction and being movable in rotation around axes (A), extending along said first direction, between a central position and at least one end position, each of said fins (4) comprising at least one principal face (10), said principal face extending essentially parallel to the peripheral wall (3) in the central position of the fin (4), **characterised in that** each first fin (4) comprises a row of reliefs (16) projecting from the principal face (10) and distributed over said principal face (10), the reliefs (16) of the principal face (10) extending between two adjacent first fins (4) or between a first fin (4) and the peripheral wall (3) when said fin (4) is adjacent to said wall (3), each relief (16) forming a non-zero angle with the axis of the fin in such a way as to reduce, to the right of said relief, the space between the principal face of said fin (4) and the adjacent first fins (4) or the peripheral wall (3) in said central position.

2. Air outlet device according to claim 1, **characterised in that** the first fin (4) comprises two principal faces (10) opposite to each other and extending essentially parallel to the peripheral wall (3) in the central position of the first fin (4), each of said faces (4) comprising a row of reliefs (16).

3. Air outlet device according to claim 2, **characterised in that** the principal faces (10) of each fin (4) each comprise a row of reliefs (16) extending essentially parallel to each other, the row of the principal face (10) of a fin (4) being offset along the first direction and/or along the axis of the air duct with respect to the row of the principal face (10) of an adjacent fin (4).

4. Air outlet device according to any one of claims 1 to 3, **characterised in that** the peripheral wall (3) comprises at least one relief (18) projecting from said peripheral wall (3) and towards an adjacent first fin (4).

5. Air outlet device according to any one of claims 1 to 4, **characterised in that** each relief (16) extends over an upstream part (12), respectively over a downstream part (14), of the principal face (10) of the first fin (4), the downstream part (14), respectively the upstream part (12), of said principal face (10) being devoid of relief (16).

6. Air outlet device according to any one of claims 2 to 5, **characterised in that** each relief (16) of a principal face (10) of the fin (4) extends over the upstream part (12) of said principal face (10), each relief (16) of the other principal face (10) of said fin (4) extending over the downstream part (14) of said principal face.

7. Air outlet device according to any one of claims 1 to 6, **characterised in that** it further comprises at least one second fin (6), extending along a second direction, different from the first direction, and being movable in rotation around an axis (B) extending along the second direction.

8. Air outlet device according to any one of claims 1 to 7, **characterised in that**, in the extreme position, the first fins (4) are pressed against each other in such a way as to block the air duct and prevent air from passing beyond said first fins (4).

9. Air outlet device according to claim 8 dependent on claim 6, **characterised in that**, in the extreme position, the upstream parts (12) of the first fins (4) are supported against each other.

10. Dashboard for vehicle, said dashboard comprising at least one air outlet orifice, connected to the vehicle's ventilation system, **characterised in that** an air outlet device (1) according to any one of claims 1 to 9 is disposed in said orifice in such a way as to control the direction of airflow exiting said ventilation system.
